# EUROPEAN PATENT SPECIFICATION

(11) **EP 3 263 272 B1**
(45) Date of publication and mention of the grant of the patent: **01.04.2020**
(21) Application number: 15883232.9
(22) Date of filing: 27.02.2015
(51) Int. Cl.: B23K 35/363, B23K 35/26, B23K 35/36, B23K 35/362, B23K 35/02, C22C 13/00, H05K 3/34

(54) **FLUX**
FLUSSMITTEL
FLUX

(43) Date of publication of application: 03.01.2018
(73) Proprietor: SENJU METAL INDUSTRY CO., LTD., Tokyo, 120-8555 (JP)
(72) Inventor: YAMASAKI, Hiroyuki, Tokyo 120-8555 (JP); HAGIWARA, Takashi, Tokyo 120-8555 (JP)
(74) Representative: D Young & Co LLP
(86) International application number: PCT/JP2015/055782
(87) International publication number: WO 2016/135938

(56) References cited:
- WO-A1-2013/187363
- WO-A1-2013/187363
- WO-A1-2014/103751
- CN-A- 102 357 748
- GB-A- 2 107 362
- JP-A- S 487 860
- JP-A- H06 155 078
- JP-A- 2002 059 293

## Description

### [TECHNICAL FIELD]

The present invention relates to a flux used for soldering a resin-coated wire in which a resin coating is removed therefrom by dissolving the resin coating with heat.

### [BACKGROUND]

In general, the flux used for the soldering has an effect of removing any metal oxide existing on the solder and the surface of metal to be soldered at a solder melting temperature and an effect of enabling metallic elements to be transferred at a boundary therebetween.

In recent years, wire by aluminum (Al) or an aluminum alloy has been proposed instead of wire by copper (Cu). It has been known that in the soldering to aluminum, it is difficult to remove an oxide film formed on a surface of the aluminum or a surface of the aluminum alloy, so that the flux having strong activity has been used.

When, however, the flux has too strong activity, it corrodes the aluminum, the aluminum alloy or metal such as copper in an object to be soldered, which is soldered with the aluminum or the aluminum alloy, so that reliability cannot be maintained after the soldering. On the other hand, when the flux has less activity, it is insufficient to remove the oxide film, so that wettability of the solder deteriorates and soldability thereof also deteriorates.

Accordingly, a flux into which a fluorinated metal salt, an organic acid metal salt and a hydrofluoric acid salt of amino-alcohol are added has been conventionally proposed (See patent document 1, for example). However, there is a risk such that the corrosion facilitates in the soldered portion and the like because of moisture absorption into the flux residue. Therefore, it is necessary to wash any flux residue WO2013187363 discloses a flux composition which can remove an oxide film formed on the surface of aluminum and does not require cleaning of a flux residue comprising amine fluoride, containing base resin which comprises 65 to 94% by mass of a water insoluble resin, 3 to 22% by mass of at least an amine, 1 to 2% by mass of an amine fluoride salt produced by reacting an amine and an acid as a fluorine- by mass to 30% by mass, wherein as the amine fluoride salt, at least one species of salt formed from an amine compound including any of the pyridine derivative, the imidazole derivative, the guanidine derivative, the ethylamine and the picoperine, and acid including any of hydrofluoric acid, fluoboric acid and hexafluorosilicic acid, or amine-borontrifluoride complex.

In contrast, the inventors have proposed a flux which can remove an oxide film formed on a surface of the aluminum or a surface of the aluminum alloy and can be used without being washed (See patent document 2).

### [PRIOR ART DOCUMENTS]

### [PATENT DOCUMENTS]

Patent Document 1: Japanese Patent Application Publication No. 2002-59293
Patent Document 2: Japanese Patent No. 5435186

### [SUMMARY OF THE INVENTION]

### [PROBLEM TO BE SOLVED BY THE INVENTION]

When using a polyurethane coated aluminum wire in which a core wire made of the aluminum or the aluminum alloy is coated with polyurethane as resin, a technology has been proposed such that the core wire is soldered by dissolving the coating with heat by dipping the wire in which the coating of the portion to be soldered has not yet been removed into solder melted by applying heat at a temperature higher than the melting temperature.

Even when, however, a resin-coated wire such as the polyurethane coated aluminum wire in which the coating has not yet been removed is dipped into the molten solder, it has been impossible to remove the coating sufficiently. When the coating is not removed sufficiently to remain thereon, the coating residue hampers any solder wet-spread during soldering even if the flux which can remove the oxide film formed on the surface of the aluminum or the surface of aluminum alloy is used. This causes wettability of the solder to deteriorate so that the soldability thereof also deteriorates.

It is known that alkali degrades the polyurethane. Accordingly, it is possible to remove the coating residue by applying a flux to which alkanolamine is added and performing the soldering after the coating is removed by dipping the polyurethane coated aluminum wire into the molten solder.

However, when the alkanolamine remains as flux residue, corrosion of the object to be soldered is facilitated so that it is necessary to remove the flux residue by washing out it. When the wash is insufficient, reliability cannot be maintained after the soldering.

The present invention solves such problems and has an object to provide a flux that is capable of improving dissolubility of the resin coating and inhibiting any corrosion.

### [MEANS FOR SOLVING THE PROBLEMS]

The inventors of this application have found out compositions that are capable of improving dissolubility of the resin coating and inhibiting any corrosion to make it unnecessary to wash the flux residue by adding an organic acid which neutralizes the alkanolamine to form a water-insoluble salt into a liquid flux to which alkanolamine, amine fluoride salt and a solvent are added.

This invention relates to a flux containing 10 through 20 mass% of alkanolamine, 5 through 10 mass% of amine fluoride salt and/or amine trifluoride boron complex, 10 through 20 mass% of an organic acid which neutralizes the alkanolamine to form a water-insoluble salt and 50 through 75 mass% of a solvent.

Amine boron trifluoride complex may be used instead of the amine fluoride salt. Both of the amine boron trifluoride complex and the amine fluoride salt may be used.

0 through 5 mass% of a water-insolvable acrylic resin or rosin ester having an acid value of 30 or less may be added in the flux of this invention.

### [EFFECT OF THE INVENTION]

In the flux according to the invention, by adding the alkanolamine thereto, dissolubility of the resin coating in the resin-coated wire is improved. This enables the coating residue to be sufficiently removed by applying the flux after the resin-coated wire is dipped to the molten solder and the coating is dissolved with heat and executing the soldering. Thus, any coating residue which hampers any solder wet-spread of the solder does not remain during the soldering, which improves the soldability thereof.

In addition, by adding the alkanolamine and the amine fluoride salt, it is possible to remove the oxide film from a surface of the metal even when the object to be soldered is the aluminum or the aluminum alloy, which improves the soldability thereof.

Further, by adding an organic acid which neutralizes the alkanolamine to form a water-insoluble salt, it is possible to prevent the alkanolamine itself from remaining on the flux residue, which enables corrosion resistance thereof to be improved. By forming the water-insoluble salt, it is possible to suppress moisture-absorption characteristics thereof, which inhibits the corrosion of the object to be soldered by the coating residue, so that it is possible to use the flux residue without washing it.

### [EMBODIMENT FOR IMPLEMENTING THE INVENTION]

The flux according to this embodiment is a liquid flux which is obtained by dissolving an amine compound, an activator and an acid into a solvent.

As the amine compound, the alkanolamine is added in order to improve dissolubility of the coating in the resin-coated wire. As the alkanolamine, a variety of alkanolamine having a carbon number of 2 through 15, preferably, 9 through 15, for example, ethanolamine, 3-amino-1-propanol, 1-amino-2-propanol, diethanolamine, diisopropanolamine, triethanolamine, triisopropanolamine, N-(2-hydroxypropyl)ethylenediamine, N-(3-hydroxypropyl)ethylenediamine, N,N'-Bis(2-hydroxypropyl)ethylenediamine, N,N'-Bis(3-hydroxypropyl)ethylenediamine, N,N,N',N'-Tetrakis(2-hydroxypropyl)ethylenediamine, or N,N,N',N'-Tetrakis(3-hydroxypropyl)ethylenediamine is listed. Any of the above-mentioned alkanolamines or plural ones among them are added.

In a case of decreasing an additive amount of the alkanolamine, dissolubility of the coating deteriorates, so that it is impossible to remove the coating sufficiently, which causes the soldability thereof to deteriorate. On the other hand, when the additive amount of the alkanolamine increases and the alkanolamine remains as the flux residue, it is impossible to inhibit the corrosion of the object to be soldered. Accordingly, the additive amount of the alkanolamine is set to be 10 mass% or more and 20 mass% or less, taking into consideration the dissolubility of the coating and the corrosive property.

The activator is preferably added as a salt and the amine fluoride salt formed by reaction of halogen compound, amine compound and an acid is added. As the amine fluoride salt, a salt formed by amine compound containing any of pyridine derivative, imidazole derivative, guanidine derivative, ethylamine and piperidine, and an acid containing any of hydrofluoric acid, fluoboric acid and hexafluorosilicic acid is listed.

In a case of decreasing an additive amount of the amine fluoride salt, it is impossible to remove the oxide film sufficiently, which causes the soldability thereof to deteriorate. On the other hand, when the additive amount of the amine fluoride salt increases, it is impossible to inhibit the corrosion of the object to be soldered. Accordingly, the additive amount of the amine fluoride salt is set to be 5 mass% or more and 10 mass% or less, taking into consideration the soldability and the corrosive property.

The acid is an organic acid which neutralizes the alkanolamine to form a water-insoluble salt. As the organic acid, a long-chain fatty acid having a carbon number of 16 through 24 is added. As the long-chain fatty acid, for example, a palmitic acid, a stearic acid and an arachidic acid are listed.

An additive amount of the organic acid may be massive in order to form the salt but it is set to be 10 mass% or more and 20 mass% or less, taking into consideration the additive amount of the alkanolamine.

As the solvent, lower alcohol having a carbon number of 1 through 5 is added. As the lower alcohol, for example, ethanol, 1-propernol, 2-propernol, 1-butanol or the like is listed. An additive amount of the solvent is set to be 50 mass% or more and 75 mass% or less, taking into consideration the additive amounts of the alkanolamine, the amine fluoride salt and the organic acid.

When base materials are added to the flux, the base material is required to have any heat-resisting property which cannot be decomposed and volatilized at a heating temperature in the soldering time and can protect the activator component from the heat. On the other hand, the component which cannot be decomposed and volatilized at the heating temperature in the soldering time remains as flux residue around the soldered portion after the soldering.

When the flux residue has water-soluble component, in a soldered product such as electronic parts and a board, there is a risk such that the corrosion facilitates in the soldered portion and the like because of moisture absorption into the flux residue. Therefore, it is necessary to wash the flux residue when components becoming the flux residue are water-soluble.

Therefore, in a case of adding the base materials, a water-insolvable and solvent-solvable resin which can be melted at the heating temperature in the soldering time, in order to allow the activator to contact a metal to be soldered, is added. As the resin, for example, acrylic resin is added. Alternatively, rosin having a low acid value of 30 or less in this embodiment is added as the base materials, taking the solderability into consideration. As the rosin, for example, rosin ester is added. An additive amount of the acrylic resin or the rosin ester is set to be 0 mass% or more and 5 mass% or less.

### [EXECUTED EXAMPLES]

They prepared the flux of the executed examples and the comparison examples having compositions as indicated in the following Table 1 and reviewed solderability and corrosive property thereof.

### (1) Evaluation Method:

### (a) Solderability

Each test piece was prepared by winding the polyurethane coated aluminum wire having a diameter φ of 0.55mm around a Sn-Ni plated Cu pin without removing the coating. The test piece was dipped into the solder melted at 370 degrees C for 5 seconds to fuse the coating and remove it.

The flux was applied to each test piece in which the coating was removed from the polyurethane coated aluminum wire. A forward end of the test piece to which the flux was applied was dipped into the solder melted at 370 degrees C for around 3 seconds to volatilize any solvent components from the flux and then, the test piece was soldered by dipping it into the solder melted at 370 degrees C for around 5through10 seconds.

### (b) Corrosive Property

The flux was applied to copper plates and they were left as they were for 96 hours under environment of temperature of 40 degrees C and relative humidity of 95%.

### (2) Decision Standards

### (a) Solderability

Double Circle Mark; Well soldered
Single Circle Mark; Small soldered but being wet and spread-out
Triangle Mark; Soldered but being not spread-out
Cross Mark; Not soldered

### (b) Corrosive Property

Single Circle Mark; No corrosion was seen
Triangle Mark; Corrosion was partially seen
Cross Mark; Corrosion was seen

**[TABLE 1]**

| | EXECUTED EXAMPLE 1 | EXECUTED EXAMPLE 2 | EXECUTED EXAMPLE 3 | EXECUTED EXAMPLE 4 | EXECUTED EXAMPLE 5 | EXECUTED EXAMPLE 6 | COMPARISON EXAMPLE 1 | COMPARISON EXAMPLE 2 | COMPARISON EXAMPLE 3 | COMPARISON EXAMPLE 4 | COMPARISON EXAMPLE 5 |
|---|---|---|---|---|---|---|---|---|---|---|---|
| ACRYLIC RESIN | | | | 5 | | | | | | | |
| ROSIN ESTER | | | | | 5 | | | | | | |
| POLYMERIZED ROSIN | | | | | | | | 5 | | | |
| ORGANIC ACID | 15 | 15 | 20 | 15 | 15 | 10 | | 15 | 15 | 5 | 15 |
| ALKANOLAMINE | 15 | 15 | 20 | 15 | 15 | 10 | 15 | 15 | 15 | 5 | |
| AMINE FLUORIDE SALT | 5 | 10 | 5 | 5 | 5 | 5 | 5 | 5 | 15 | 5 | 5 |
| SOLVENT | 65 | 60 | 55 | 60 | 60 | 75 | 80 | 60 | 55 | 85 | 80 |
| TOTAL | 100 | 100 | 100 | 100 | 100 | 100 | 100 | 100 | 100 | 100 | 100 |
| SOLDARABILITY | ⊚ | ⊚ | ⊚ | ⊚ | ○ | ○ | ○ | Δ | ⊚ | Δ | × |
| CORROSION RESISTANCE | ○ | ○ | ○ | ○ | ○ | ○ | × | ○ | Δ | ○ | ○ |

From the results of Table 1, they have found out that the coating residue can be fused with heat during the soldering and removed by applying the flux of any executed examples to execute the soldering after the polyurethane coated aluminum wire is dipped into the molten solder to remove the coating.

Namely, as shown in the executed examples 1 through 3 from the results of Table 1, they have found out that when the alkanolamine, the amine fluoride salt and the organic acid are added to the flux within a predetermined range thereof as well as the solvent is added within a predetermined range thereof according to an additive amount of the alkanolamine, the amine fluoride salt and the organic acid, excellent solderability and excellent corrosion resistance can be obtained.

In contrast, in the comparison example 4 in which an additive amount of the alkanolamine decreases and in the comparison example 5 in which no alkanolamine is added, the solderability deteriorated. This is because it is conceivable that the coating residue is unaffected when an additive amount of the alkanolamine is small or no alkanolamine is added, so that the coating residue cannot be removed sufficiently with the heat.

Thus, they have found out that when the additive amount of the alkanolamine is 10 mass% or more and 20 mass% or less, the dissolubility of the resin coating is improved and excellent solderability can be obtained.

In the comparison example 3 in which an additive amount of the amine fluoride salt increases, the corrosion resistance deteriorated. This is because it is conceivable that the flux has too enhanced activity.

Thus, they have found out that when the additive amount of the amine fluoride salt is 5 mass% or more and 10 mass% or less, it is possible to remove an oxide film from a surface of the aluminum and a surface of the Sn-Ni plated Cu pin to obtain excellent wettability, which obtains excellent solderability and enables the corrosion to be inhibited to obtain excellent the corrosion resistance.

Further, from the results of Table 1, in the comparison example 1 in which no organic acid is added, the corrosion resistance deteriorated. This is because it is conceivable that the alkanolamine itself remains on the flux residue when a predetermined amount of the alkanolamine is added, because there is no organic acid that can neutralize an excess of the alkanolamine.

Thus, they have found out that when the additive amount of the organic acid is 10 mass% or more and 20 mass% or less, it is possible to inhibit the corrosion to obtain excellent corrosion resistance even if the flux to which the alkanolamine is added is used.

When the base materials are used, in the executed example 4 in which the water-insolvable acrylic resin is added, and in the executed example 5 in which the rosin ester having an acid value of 30 or less is added, they have found out that excellent corrosion resistance can be obtained without preventing excellent solderability.

In contrast, in the comparison example 2 in which the polymerized rosin having an acid value exceeding 30 is added, the solderability deteriorated. This is because it is conceivable that acidity in the flux increases when the acid value of the rosin increases so that it is difficult to remove the oxide film from the aluminum, thereby causing the solderability to deteriorate.

Thus, they have found out that when the additive amount of the acrylic resin or the rosin ester having an acid value of 30 or less is 0 mass% or more and 5 mass% or less, it is possible to obtain excellent corrosion resistance without hindering excellent solderability. They also have found out that when the additive amount of the solvent is 50 mass% or more and 75 mass% or less according to an additive amount of the alkanolamine, the amine fluoride salt, the organic acid and the base materials, the excellent solderability and the excellent corrosion resistance are not hindered.

### [INDUSTRIAL AVAILABILITY]

The present invention is applicable to the soldering of a resin coated wire in which a core wire made of the aluminum or the aluminum alloy is coated with resin.

## Claims

1. A flux containing:
10 mass% or more and 20 mass% or less of alkanolamine;
5 mass% or more and 10 mass% or less of at least one of amine fluoride salt and amine trifluoride boron complex;
10 mass% or more and 20 mass% or less of an organic acid which neutralizes the alkanolamine to form a water-insoluble salt; and
50 mass% or more and 75 mass% or less of a solvent.

2. The flux according to Claim 1 further comprising 0 mass% or more and 5 mass% or less of a water-insolvable acrylic resin or rosin ester having an acid value of 30 or less.

3. The flux according to Claim 1 or 2 **characterized in that** the alkanolamine is at least one of ethanolamine, 3-amino-1-propanol, 1-amino-2-propanol, diethanolamine, diisopropanolamine, triethanolamine, triisopropanolamine, N-(2-hydroxypropyl)ethylenediamine, N-(3-hydroxypropyl)ethylenediamine, N,N'-Bis(2-hydroxypropyl)ethylenediamine, N,N'-Bis(3-hydroxypropyl)ethylenediamine, N,N,N',N'-Tetrakis(2-hydroxypropyl)ethylenediamine, and N,N,N',N'-Tetrakis(3-hydroxypropyl)ethylenediamine.

4. The flux according to Claim 1 to 3 **characterized in that** the amine fluoride salt is a salt formed by amine compound containing any one of pyridine derivative, imidazole derivative, guanidine derivative, ethylamine and piperidine, and an acid containing any one of hydrofluoric acid, fluoboric acid and hexafluorosilicic acid.

5. The flux according to Claim 1 to 4 **characterized in that** the organic acid is at least one of palmitic acid, stearic acid and arachidic acid.

## Patentansprüche

1. Flussmittel, enthaltend:
10 Massen-% oder mehr und 20 Massen-% oder weniger an Alkanolamin,
5 Massen-% oder mehr und 10 Massen-% oder weniger eines Aminfluoridsalzes und/oder Amintrifluorid-Bor-Komplexes,
10 Massen-% oder mehr und 20 Massen-% oder weniger einer organischen Säure, die das Alkanolamin unter Bildung eines wasserunlöslichen Salzes neutralisiert, und
50 Massen-% oder mehr und 75 Massen-% oder weniger eines Lösungsmittels.

2. Flussmittel nach Anspruch 1, das ferner 0 Massen-% oder mehr und 5 Massen-% oder weniger eines wasserunlöslichen Acrylharzes oder Kolophoniumesters mit einer Säurezahl von 30 oder weniger umfasst.

3. Flussmittel nach Anspruch 1 oder 2, **dadurch gekennzeichnet, dass** es sich bei dem Alkanolamin um mindestens ein Alkanolamin ausgewählt aus Ethanolamin, 3-Amino-1-propanol, 1-Amino-2-propanol, Diethanolamin, Diisopropanolamin, Triethanolamin, Triisopropanolamin, N-(2-Hydroxypropyl)ethylendiamin, N-(3-Hydroxypropyl)ethylendiamin, N,N'-Bis(2-hydroxypropyl)ethylendiamin, N,N'-Bis(3-hydroxypropyl)ethylendiamin, N,N,N',N'-Tetrakis(2-hydroxypropyl)ethylendiamin und N,N,N',N'-Tetrakis(3-hydroxypropyl)ethylendiamin handelt.

4. Flussmittel nach Anspruch 1 bis 3, **dadurch gekennzeichnet, dass** es sich bei dem Aminfluoridsalz um ein Salz handelt, das aus ein Aminverbindung, die ein Pyridinderivat, ein Imidazolderivat, ein Guanidinderivat, Ethylamin oder Piperidin enthält und einer Säure, die eine Säure ausgewählt aus Fluorwasserstoffsäure, Fluorborsäure und Hexafluorkieselsäure enthält, gebildet ist.

5. Flussmittel nach Anspruch 1 bis 4, **dadurch gekennzeichnet, dass** es sich bei der organischen Säure um mindestens eine Säure ausgewählt aus Palmitinsäure, Stearinsäure und Arachinsäure handelt.

## Revendications

1. Flux contenant :
10 % en masse ou plus et 20 % en masse ou moins d'une alcanolamine ;
5 % en masse ou plus et 10 % en masse ou moins d'au moins un parmi un sel de fluorure d'amine et un complexe amine trifluorure de bore ;
10 % en masse ou plus et 20 % en masse ou moins d'un acide organique qui neutralise l'alcanolamine pour former un sel insoluble dans l'eau ; et
50 % en masse ou plus et 75 % en masse ou moins d'un solvant.

2. Flux selon la revendication 1 comprenant en outre 0 % en masse ou plus et 5 % en masse ou moins d'une résine acrylique insoluble dans l'eau ou d'un ester de colophane possédant une valeur d'acide de 30 ou moins.

3. Flux selon la revendication 1 ou 2 **caractérisé en ce que** l'alcanolamine est au moins une alcanolamine parmi l'éthanolamine, le 3-amino-1-propanol, le 1-amino-2-propanol, la diéthanolamine, la diisopropanolamine, la triéthanolamine, la triisopropanolamine, la N-(2-hydroxypropyl)éthylènediamine, la N-(3-hydroxypropyl)éthylènediamine, la N,N'-bis(2-hydroxypropyl)éthylènediamine, la N,N'-bis(3-hydroxypropyl)éthylènediamine, la N,N,N',N'-tétrakis(2-hydroxypropyl)éthylènediamine, et la N,N,N',N'-tétrakis(3-hydroxypropyl)éthylènediamine.

4. Flux selon la revendication 1 à 3 **caractérisé en ce que** le sel de fluorure d'amine est un sel formé par un composé d'amine contenant l'un quelconque parmi un dérivé de pyridine, un dérivé d'imidazole, un dérivé de guanidine, l'éthylamine et la pipéridine, et un acide contenant l'un quelconque parmi l'acide fluorhydrique, l'acide fluoroborique et l'acide hexafluorosilicique.

5. Flux selon la revendication 1 à 4 **caractérisé en ce que** l'acide organique est au moins l'un parmi l'acide palmitique, l'acide stéarique et l'acide arachidique.
